# FASCICULE DE BREVET EUROPEEN

(11) **EP 0 474 535 B1**
(45) Date de publication et mention de la délivrance du brevet: **22.11.1995**
(21) Numéro de dépôt: 91402289.2
(22) Date de dépôt: 21.08.1991
(51) Int. Cl.: B01D 53/02, B01D 53/34, B01D 53/64, C10G 55/04

(54) **Procédé d'élimination du mercure des installations de vapocraquage**
Verfahren zum Entfernen von Quecksilber aus Dampfcrackanlage
Process for eliminating mercury from steam cracking plants

(30) Priorité: 29.08.1990 FR 9010846
(43) Date de publication de la demande: 11.03.1992
(73) Titulaire: INSTITUT FRANCAIS DU PETROLE, 92502 Rueil-Malmaison (FR)
(72) Inventeur: Boitiaux, Jean-Paul, F-78300 Poissy (FR); Sarrazin, Patrick, F-92500 Rueil Malmaison (FR)

(56) Documents cités:
- US-A- 3 755 989
- US-A- 4 892 567

## Description

Il est connu que les condensats liquides sous-produits de la production du gaz (gaz naturel, gaz associé) et les pétroles bruts peuvent contenir de nombreux composés métalliques à l'état de traces et notamment du mercure.

Le vapocraquage de ces charges est de plus en plus pratiqué, ce qui a pour conséquence de produire des effluents pollués par du mercure. Les catalyseurs des procédés de transformation situés en aval de ce vapocraquage sont donc soumis à de sévères empoisonnements, ce qui dans certains cas rend les condensats de gaz économiquement moins attractifs. Le mercure présente en outre le risque de provoquer des corrosions par formation d'amalgames avec les alliages à base d'aluminium, notamment dans les sections des procédés opérant à une température suffisamment basse pour provoquer la condensation de mercure liquide (fractionnements cryogéniques, échangeurs).

De nombreux produits sont enseignés par l'art antérieur comme présentant une activité démercurisante intéressante. C'est ainsi que l'on trouve des masses constituées de charbon actif imprégné de soufre ou d'iode dans le brevet US-A-3194629, d'oxyde de cuivre comme dans le brevet US-A-4877920. Le brevet US-A-4843102 revendique l'emploi d'une résine imprégnée de polysulfure de même que le brevet US-A-4877515 qui dépose ces polysulfures sur un tamis moléculaire. Parfois le tamis moléculaire est imprégné par un métal connu pour former des amalgames comme l'argent ou l'or : brevets US-A-4892567 et US-A-4874525. Le brevet US-A-3194629 de la demanderesse décrit d'autres masses comprenant du cuivre au moins en partie sous forme de sulfure et un support minéral.

Ces différentes masses sont très efficaces pour capter le mercure métallique mais le sont peu lorsque le métal est combiné sous forme de diméthylmercure ou de composés du mercure comprenant des chaînes hydrocarbonées renfermant deux ou plus de deux atomes de carbone et, éventuellement d'autres éléments non métalliques (soufre, azote...). Pour assurer une élimination complète du mercure dans tous les cas, la demanderesse décrit deux procédés constitués de deux zones de réactions en série contenant deux masses utilisées de préférence en série, la première réalisant l'hydrogénolyse des composés organométalliques en présence d'hydrogène et la seconde captant la majeure partie du mercure contenu.

C'est ainsi que la demande de brevet français FR-A-2644472 décrit le premier catalyseur comme renfermant au moins un métal M du groupe constitué par le nickel, le cobalt, le fer et le palladium suivi de -ou mélange à- une masse de captation renfermant du soufre, ou un sulfure de métal.

Quant à la demande de brevet français FR-A-2644359, il décrit le premier catalyseur comme renfermant au moins un métal M choisi dans le groupe formé par nickel, cobalt, fer, palladium et platine, au moins un métal N choisi dans le groupe formé par chrome, molybdène, tungstène et uranium suivi de -ou mélangé à- une masse de captation de mercure renfermant un sulfure d'au moins un métal P choisi dans le groupe formé par le cuivre, le fer et l'argent, ou du soufre.

Ces deux procédés opérant en présence d'hydrogène ne peuvent être utilisés sur les gaz craqués qui contiennent des quantités notables de composés insaturés. Il est donc nécessaire de les utiliser en amont du vapocraqueur en prétraitement de charge. Une telle situation est très intéressante car elle permet d'assurer l'élimination du mercure dans l'ensemble de l'installation sur toutes les coupes insaturées produites. Elle permet également d'éviter la pollution par le mercure des installations en contact avec les gaz craqués avant leur séparation en différentes coupes.

Néanmoins beaucoup d'installations (zones) de vapocraquage ont fonctionné avec des charges polluées par du mercure sans utiliser quelque technologie d'élimination du mercure que ce soit. Dans ce cas l'ensemble de l'installation est pollué par le mercure et la tension de vapeur limitée, mais non négligeable, de ce métal fera que même des effluents exempts de mercure parce que la charge du vapocraqueur a été traitée, pourront se charger à nouveau de mercure.

De plus il est d'une pratique courante "d'importer" des coupes insaturées en plus de celles que l'on produit sur place afin d'augmenter la flexibilité de l'installation. Dans ce cas il n'est pas suffisant d'éliminer le mercure de la charge du vapocraqueur, il faut encore installer des masses de captation sur les produits craqués.

On peut dans ce cas faire appel aux différents produits cités ci-dessus mais ils présentent tous l'inconvénient d'un retraitement polluant.

C'est ainsi que les résines doivent être traitées par des solutions qui entraînent le mercure capté, ce qui impose des traitements en aval coûteux. Les charbons doivent être brûlés pour que l'on puisse récupérer la phase active déposée sur leur surface, ce qui pose le problème d'une pollution grave des fumées de combustion gravement polluées par le mercure volatil. Les tamis moléculaires sont pour la plupart régénérables mais encore faut-il avoir une installation permettant d'éliminer le mercure des effluents de régénération.

Par contre les masses de captation de mercure utilisées en amont telles que décrites dans les demandes de brevet FR-A-2644472 et FR-A-2644359 sont des produits minéraux qui ont une composition voisine des minerais qui contiennent du mercure ; il est donc tout à fait courant de traiter de tels solides pour en extraire les composants métalliques ainsi que le mercure contenu.

L'objet de la présente invention est donc de proposer un procédé permettant d'éliminer le mercure des charges de vapocraqueur qui en contiennent, d'éliminer le mercure des installations déjà actuellement polluées et d'autoriser le traitement conjoint de coupes insaturées de l'extérieur, même si celles-ci contiennent du mercure. Cette élimination du mercure se fait sans risque pour l'environnement, en ce qu'il n'y a substantiellement aucune trace de mercure dans l'air ou dans les liquides sortant de la zone de vapocraquage.

L'objet de la présente invention est résolu par le procédé comme défini dans la revendication 1

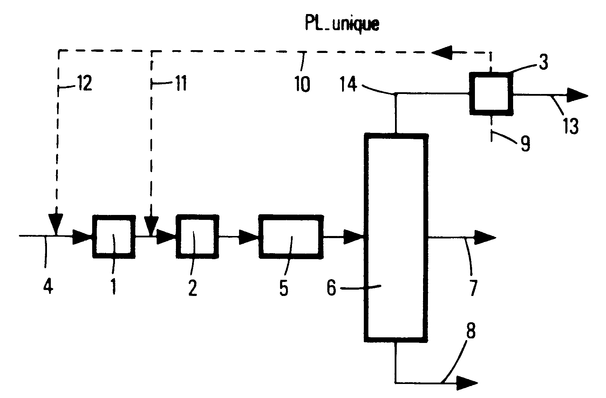

La considération de la figure suivante permet d'illustrer l'invention.

Le procédé comporte au minimum trois masses différentes qui sont utilisées de la façon suivante :

La charge du vapocraqueur ou du moins la partie de celle-ci qui contient les composés de mercure, arrivant par la conduite 4, est hydrogénolysée sur une première masse, notée Masse 1 sur la figure. Cette masse peut être l'une quelconque des masses proposées dans les brevets de la demanderesse ci-dessus mentionnés.

Le mercure de la charge est ainsi transformé en mercure métallique, quelle que soit sa forme originelle, ce qui permet sa captation par la seconde masse, notée Masse 2 sur la figure. La composition de cette masse peut par exemple être celle qui est décrite dans les deux mêmes brevets précités.

La charge totale démercurisée est alors introduite dans les différents fours de vapocraquage 5. A la sortie de la section de trempe les produits de craquage sont séparés dans une tour (zone) de fractionnement primaire 6 en une tête de colonne 14 constituée de produits gazeux qu'on appelle les gaz craqués, un soutirage 7 latéral constitué par de l'essence et en un fond de colonne 8 qui constitue l'huile de trempe.

L'expérience montre que malgré son point d'ébullition élevé le mercure éventuellement présent se concentre dans les gaz craqués. On ne sait pas exactement la raison de ce comportement ; sans doute le mercure est-il en association étroite avec les composés insaturés qui sont contenus en grande quantité dans les produits légers.

On place donc une troisième masse de garde sur ce flux de gaz craqués, Masse 3 de la figure. Cette masse peut être l'une quelconque des masses enseignées par l'art antérieur pourvu qu'elle soit régénérable par un traitement en température sous débit de gaz. On peut utiliser des tamis moléculaires, sur lesquels on peut éventuellement déposer des métaux ou d'autres espèces actives. Cette masse servira de garde au cas où le système d'épuration des charges laisserait passer du mercure. Les gaz craqués sortent finalement de la Masse 3 par la conduite 13.

Si une coupe d'hydrocarbures insaturés est approvisionnée de l'extérieur et risque de contenir du mercure, on peut l'injecter avec les gaz craqués du vapocraqueur en amont de cette troisième masse de captation.

L'intérêt d'un tel arrangement de différentes masses est évident si l'on prend en considération la régénération. Celle-ci se fera avec un gaz, par exemple de l'éthane qui, arrivant par la conduite 9, entraîne le mercure adsorbé sur la Masse 3, ce mercure est à l'état métallique et peut être capté par l'une au moins des masses en amont, de préférence par la Masse 2. Cette injection se fait sur la Masse 1 par les conduites 10 et 12 ou sur la Masse 2 par les conduites 10 et 11. On pourra donc injecter par exemple le gaz de régénération sur la masse 2 par les conduites 10 et 11 où il est débarrassé du mercure qu'il contient. Il est ainsi sans danger pour l'environnement et peut être injecté dans les fours de craquage où il est transformé en éthylène. D'autre part, la présence d'une zone de séparation gaz-liquide sur le trajet du gaz de régénération avant sa démercurisation par au moins une autre masse permet de récupérer au moins 89 % en poids du mercure grâce à au moins un système de purge et ce sous forme de mercure liquide.

Dans le cas où le dimensionnement du train de séparation des gaz craqués ne permet pas d'injecter les coupes d'importation en amont de la section froide on pourra l'injecter directement en aval, par exemple en le mélangeant avec la coupe C₃ si c'est une coupe C₃ que l'on importe. Dans ce cas il sera nécessaire de disposer une charge de même type sur la coupe C₃ seule que l'on pourra régénérer de la même façon en envoyant les gaz de régénération se mélanger à la charge en amont du vapocraqueur où on aura installé le système de démercurisation à deux lits.

Dans le cas où l'on veut épurer une unité de vapocraquage qui a été préalablement contaminée par du mercure, il est probable que ce mercure s'est déposé dans la boîte froide. Il sera dans ce cas nécessaire de mettre les masses de captation régénérables sur les produits séparés, c'est-à-dire sur les C₂, C₃, C₄.

### EXEMPLE 1 (selon l'invention)

On prépare trois masses différentes, que l'on nomme dans la suite de l'exemple, Masse 1, Masse 2, Masse 3. Ces masses sont préparées comme suit :
1) Masse 1 : Masse constituée de nickel sur alumine macroporeuse préparée selon la description donnée dans le brevet français FR-A-2628338.
2) Masse 2 : Masse constituée d'un sulfure de cuivre, déposé sur un support d'alumine selon la description donnée dans le brevet US-A-4094777.
3) Masse 3 : Masse constituée d'une zéolithe Y échangée à l'argent selon la description donnée dans le brevet US-A-4874525.

### EXEMPLE 2 (comparaison)

500 cm³ de masse 3 sont chargés dans un réacteur en acier de 5 cm de diamètre. Après purge à l'azote, on fait passer dans le réacteur, en flux ascendant, du n-hexane dans lequel on a dissous du mercure à raison de 1 milligramme par litre. Les essais sont réalisés dans les conditions suivantes :

| | |
|---|---|
| débit de charge | 5 l/h |
| température | 20°C |
| durée | 200 h |

Les analyses de mercure effectuées en sortie du réacteur n'ont indiqué aucune trace de mercure pendant toute la durée du test.

On procède alors à la régénération de cette masse en débitant 100 l/h d'éthane en flux descendant à pression atmosphérique, à 325°C. Les effluents sont refroidis à 20°C et introduits dans un séparateur liquide-gaz muni d'une purge de liquide.

Durant les deux premières heures du traitement, les analyses de mercure effectuées dans le gaz sortant du séparateur indiquent la présence de mercure, avec des pointes de concentration allant jusqu'à 50 microgrammes par litre. Durant ce laps de temps, on récupère par la purge une masse de mercure liquide égale à 890 mg.

On voit donc qu'une quantité non négligeable de mercure n'est pas captée par un tel procédé.

### EXEMPLE 3 (selon l'invention)

500 cm³ de chaque masse sont chargés dans trois réacteurs identiques en acier de 5 cm de diamètre. La masse 1 est chargée dans le réacteur 1, la masse 2 dans le réacteur 2 et la masse 3 dans le réacteur 3.

Les masses 2 et 3 sont purgées à l'azote et la masse 1 est soumise à un traitement de 8 heures sous un débit de 200 l/h d'hydrogène, à une pression de 2 bars et à une température de 400°C.

On procède alors exactement de la même façon que dans l'exemple 2 pour charger la masse 3 avec du mercure puis on procède de la même façon pour effectuer la régénération,mais les effluents sont lavés dans une colonne d'absorption par un condensat lourd de gaz liquéfié bouillant dans la gamme des points d'ébullition de 30 à 350°C et contenant 50 ppb de mercure. Ce naphta, après contact avec le gaz de régénération est passé, avec de l'hydrogène, en flux ascendant sur la masse 1 dans les conditions suivantes :

| | |
|---|---|
| débit de charge | 5 l/h |
| température | 180°C |
| pression | 30 bar |
| débit d'hydrogène | 20 l/h |

A la sortie du réacteur 1 les effluents sont refroidis à 20°C et passés en flux ascendant sur la masse 2.

L'analyse des effluents gazeux de la colonne d'absorption ainsi que des effluents liquides du réacteur 2 n'indique aucune trace de mercure.

Ce procédé permet donc d'assurer une élimination totale du mercure de l'installation.

### EXEMPLE 4 (selon l'invention)

On reconduit l'expérience précédente en intercalant un séparateur gaz-liquide entre le réacteur 3 et la colonne d'absorption.

Les analyses des effluents tant liquides que gazeux n'indiquent aucune présence de mercure. La purge du séparateur a permis de récupérer 897 mg de mercure liquide.

Ce procédé permet donc de ne sortir de l'installation que du mercure liquide que l'on peut utiliser par ailleurs pour toutes applications du mercure métallique, connues de l'homme de l'art.

### EXEMPLE 5 (selon l'invention)

On reconduit l'expérience de l'exemple 2 mais en remplaçant le séparateur gaz-liquide par le réacteur 2 contenant la masse 2. Toutes les analyses de mercures effectuées sur les effluents gazeux du réacteur 2 n'indiquent aucune trace de mercure.

### EXEMPLE 6 (selon l'invention)

On reconduit l'expérience de l'exemple 2 mais en faisant passer les effluents gazeux du séparateur gaz-liquide sur le réacteur 2 contenant la masse 2. Toutes les analyses de mercures effectuées sur les effluents gazeux du réacteur 2 n'indiquent aucune trace de mercure. On récupère dans la purge liquide du séparateur 899 mg de mercure.

### EXEMPLE 7 (selon l'invention)

On reconduit l'expérience de l'exemple 3 mais on comprime à 30 bars les effluents gazeux du réacteur 3 en régénération et l'on injecte ces gaz dans le réacteur 2 en complément du naphta sortant du réacteur 1. Les analyses effectuées en sortie du réacteur 2 n'indiquent aucune trace de mercure.

### EXEMPLE 8 (selon l'invention)

On reconduit l'expérience de l'exemple 7 mais on intercale un séparateur gaz-liquide entre le réacteur 3 et le compresseur. Les analyses n'indiquent pas de mercure en sortie du réacteur 2 et on récupère à la purge du séparateur 898 mg de mercure.

## Revendications

1. Procédé d'élimination du mercure dans une unité de vapocraquage, procédé dans lequel la charge à vapocraquer est démercurisée par contact avec une masse M1 d'hydrogénolyse suivi du contact avec une masse M2 de captation du mercure, puis la charge démercurisée est vapocraquée et les produits gazeux sont fractionnés, caractérisé en ce que lesdits produits gazeux craqués à démercuriser sont mis au contact d'une masse M3 de captation du mercure regénérable par un gaz, et que les gaz issus de ladite regénération chargés en mercure sont introduits sur l'une au moins des masses M1, M2.

2. Procédé selon la revendication 1, dans lequel la masse est régénérée par traitement en température sous débit de gaz.

3. Procédé selon l'une des revendications précédentes, dans lequel ladite première masse M1 active en amont contient au moins un catalyseur renfermant au moins un métal M du groupe constitué par le nickel, le cobalt, le fer et le palladium suivi de -ou mélangé à- une masse de captation M2 renfermant du soufre ou au moins un sulfure de métal.

4. Procédé selon l'une des revendications précédentes dans lequel le catalyseur de ladite première masse M1 renferme au moins un métal M du groupe constitué par le nickel, le cobalt, le fer, la palladium et le platine, au moins un métal N choisi dans le groupe formé par le chrome, le molybdène, le tungstène et l'uranium suivi de -ou mélangé à- une masse de captation M2 de mercure renfermant du soufre ou au moins un sulfure d'au moins un métal P choisi dans le groupe formé par le cuivre, le fer et l'argent.

5. Procédé selon l'une des revendications précédentes dans lequel une zone de séparation gaz-liquide est disposée sur le trajet du gaz de régénération avant sa démercurisation par au moins une autre masse.

6. Procédé selon l'une des revendications précédentes dans lequel une coupe insaturée est injectée avec les gaz craqués sortant en tête de colonne de la zone de fractionnement primaire située à la sortie de la section de trempe, en amont de ladite lisse en aval.

7. Procédé selon l'une des revendications précédentes dans lequel le gaz de régénération est de l'éthane.

8. Procédé selon l'une des revendications précédentes dans lequel le gaz de régénération est injecté dans les zones de chauffage de craquage après démercurisation.

9. Procédé selon l'une des revendications précédentes dans lequel une ou plusieurs nasses de captation régénérables sont mises au moins sur une partie des produits séparés en fin de vapocraquage.

10. Procedé selon l'une des revendications précédentes dans lequel le gaz de régénération est absorbé au moins en partie par la charge avant le passage dans les deux dites masses démercurisantes en amont de la zone de vapocraquage.

## Claims

1. A process for the elimination of mercury from a steam cracking installation, in which process the charge to be steam-cracked is demercurized through contact with a hydrogenolysis mass M1 followed by contact with a mass M2 for trapping the mercury, the demercurized charge is then steam-cracked, and the gaseous products are fractionated, characterised in that said cracked gaseous products which are to be demercurized are contacted with a mass M3 for trapping the mercury which is regeneratable by a gas, and that the gases issuing from said regeneration which are charged with mercury are introduced over at least one of the masses M1, M2.

2. A process according to Claim 1, in which the mass is regenerated by a temperature treatment in a gas flow.

3. A process according to one of the preceding claims, in which said first active upstream mass M1 contains at least one catalyst containing at least one metal M from the group constituted by nickel, cobalt, iron and palladium, followed by - or mixed with - a trapping mass M2 containing sulphur or at least one metal sulphide.

4. A process according to one of the preceding claims, in which the catalyst of said first mass M1 contains at least one metal M from the group constituted by nickel, cobalt, iron, palladium and platinum, at least one metal N selected from the group constituted by chromium, molybdenum, tungsten and uranium followed by - or mixed with - a mass M2 for trapping mercury containing sulphur or at least one sulphide of at least one metal P selected from the group constituted by copper, iron and silver.

5. A process according to one of the preceding claims, in which a gas-liquid separating zone is disposed on the path of the regenerating gas prior to its demercurization by at least one other mass.

6. A process according to one of the preceding claims, in which an unsaturated fraction is injected with the cracked gases issuing from the column head of the primary fractionating zone located at the outlet from the quenching section upstream of said downstream mass.

7. A process according to one of the preceding claims, in which the regenerating gas is ethane.

8. A process according to one of the preceding claims, in which the regenerating gas is injected into the cracking heating zones after demercurization.

9. A process according to one of the preceding claims, in which one or more regeneratable trapping masses is/are placed at least on part of the separated products at the end of steamcracking.

10. A process according to one of the preceding claims, in which the regenerating gas is at least partly absorbed by the charge before passing into the two demercurizing masses upstream of the steam cracking zone.

## Patentansprüche

1. Verfahren zur Beseitigung von Quecksilber in einer Einheit zum Dampfcracken, wobei in dem verfahren die zu dampfcrackende Charge durch Kontakt mit einer Masse M1 zur Hydrogenolyse gefolgt von dem Kontakt mit einer Masse M2 zur Abscheidung von Quecksilber von Quecksilber befreit wird, dann die von Quecksilber befreite Charge dampfgecrackt wird und die gasförmigen Produkte fraktioniert werden, dadurch gekennzeichnet, daß die von Quecksilber zu befreienden, gecrackten gasförmigen Produkte mit einer durch ein Gas regenerierbaren Masse M3 zur Abscheidung von Quecksilber in Kontakt gebracht werden und daß die aus der Regenerierung stammenden, mit Quecksilber beladenen Gase über wenigstens eine der Massen M1, M2 geleitet werden.

2. Verfahren nach Anspruch 1, bei welchem die Masse durch Behandlung bei Temperatur unter Gasaustrag regeneriert wird.

3. Verfahren nach einem der vorhergehenden Ansprüche, bei welchem die erste, aktive Masse M1 stromaufwärts wenigstens einen Katalysator beinhaltet, der wenigstens ein Metall M der Gruppe, welche durch Nickel, Kobalt, Eisen und Palladium gebildet ist, enthält, gefolgt von - oder gemischt mit - einer Masse M2 zur Abscheidung, die Schwefel oder wenigstens ein Metallsulfid enthält.

4. Verfahren nach einem der vorhergehenden Ansprüche, bei welchem der Katalysator der ersten Masse M1 wenigstens ein Metall M der Gruppe, welche durch Nickel, Kobalt, Eisen, Palladium und Platin gebildet ist, wenigstens ein Metall N, das aus der Gruppe ausgewählt ist, welche durch Chrom, Molybdän, Wolfram und Uran gebildet ist, enthält, gefolgt von - oder gemischt mit - einer Masse M2 zur Abscheidung von Quecksilber, die Schwefel oder wenigstens ein Sulfid mindestens eines Metalles P, das aus der Gruppe ausgewählt ist, welche durch Kupfer, Eisen und Silber gebildet ist, enthält.

5. Verfahren nach einem der vorhergehenden Ansprüche, bei welchem eine Gas-Flüssigkeit-Trennzone auf dem Weg des Gases zur Regenerierung vor seiner Befreiung von Quecksilber durch wenigstens eine weitere Masse angeordnet wird.

6. Verfahren nach einem der vorhergehenden Ansprüche, bei welchem ein ungesättigter Schnitt mit den gecrackten Gasen injiziert wird, welche am Kopf der Kolonne der primären, am Auslaß der Abschreckhärtungssektion gelegenen Fraktionierungszone stromaufwärts von der stromabwärtigen Masse austreten.

7. Verfahren nach einem der vorhergehenden Ansprüche, bei welchem das Gas zur Regenerierung Ethan ist.

8. Verfahren nach einem der vorhergehenden Ansprüche, bei welchem das Gas zur Regenerierung in die Heizzonen zum Cracken nach Befreiung von Quecksilber injiziert wird.

9. Verfahren nach einem der vorhergehenden Ansprüche, bei welchem eine oder mehrere regenerierbare Massen zur Abscheidung wenigstens auf einen Teil der getrennten Produkte am Ende des Dampfcrackens angewendet werden.

10. Verfahren nach einem der vorhergehenden Ansprüche, bei welchem das Gas zur Regenerierung wenigstens zum Teil durch die Charge vor der Durchleitung durch die zwei Quecksilber beseitigenden Massen stromaufwärts von der Dampfcrackzone absorbiert wird.
